# EUROPÄISCHE PATENTSCHRIFT

(11) **EP 0 503 125 B1**
(45) Veröffentlichungstag und Bekanntmachung des Hinweises auf die Patenterteilung: **16.03.1994**
(21) Anmeldenummer: 91105848.5
(22) Anmeldetag: 12.04.1991
(51) Int. Cl.: F16L 13/14, B21D 39/04

(54) **Pressverbindung**
Press-connection
Connexion de l'empreinte

(30) Priorität: 08.03.1991 DE 9102761 U
(43) Veröffentlichungstag der Anmeldung: 16.09.1992
(73) Patentinhaber: COHNEN BETEILIGUNGS-GMBH & CO. KG, D-35662 Dillenburg (DE)
(72) Erfinder: Trapp, Theo, W-6340 Dillenburg (DE)
(74) Vertreter: Missling, Arne, Dipl.-Ing.

(56) Entgegenhaltungen:
- DE-A- 2 724 257
- DE-A- 2 924 641
- US-A- 3 730 567
- US-A- 4 147 385
- US-A- 4 269 438

## Beschreibung

Die Erfindung bezieht sich auf eine Preßverbindung zum Leiten einer unter Druck stehenden Flüssigkeit, mit einem Rohr und mit einem mit einer Durchgangsausnehmung versehenen Armaturkörper, welcher einen fluchtend zu der Durchgangsausnehmung angeordneten Hülsenbereich umfaßt, welcher in radialer Richtung durchmesserreduzierbar ist und zur Einführung des mit zumindest einem Rohrbördel versehenen Rohres mit einem Innendurchmesser versehen ist, welcher gleich oder größer ist, als der Außendurchmesser des Rohrbördels.

Eine Preßverbindung der genannten Art ist beispielsweise aus der DE-PS 34 16 702 bekannt. Die Preßverbindung dient insbesondere dazu, Bremsflüssigkeiten zu leiten, wobei der Armaturkörper unlösbar mit dem Rohr zu verbinden ist, um eine Lockerung und Leckage zu vermeiden.

Bei Preßverbindungen besteht generell das Problem, daß die Rohre relativ dünnwandig sind und insgesamt einen geringen Durchmesser aufweisen. Übliche Preßverbindungen, bei welchen das Rohr mit einer Kontermutter unter Verwendung einer Dichtung gequetscht wird, scheiden aus, da eine Beschädigung des Rohres nicht ausgeschlossen werden kann und da zum anderen eine derartige Verbindung nicht in zuverlässiger Weise vibrationssicher ist. Bei der aus obengenanntem Patent bekannten Preßverbindung wird das Rohr in den Hülsenbereich des Armaturkörpers eingeschoben, woraufhin der Hülsenbereich an seinem freien Ende im Durchmesser reduziert oder verjüngt wird, um auf diese Weise das Rohr zu klemmen. Die Verankerung des Rohres an dem Armaturkörper erfolgt dabei ausschließlich durch die Durchmesserreduzierung des freien Hülsenbereiches, d.h. durch das Einziehen des Randes des Hülsenbereiches. Dementsprechend ist die Festigkeit der Verankerung des Rohres und damit die Festigkeit und Dichtigkeit der gesamten Preßverbindung einzig davon abhängig, mit welcher Vorspannkraft der äußere Hülsenbereich nach der Durchmesserreduzierung das Rohr gegen den Armaturkörper vorspannt. Es ist offensichtlich, daß bereits bei geringen Vibrationen oder geringen Biegebelastungen, welche auf die fertig montierte Preßverbindung aufgebracht werden, Lockerungen eintreten können, welche zu Leckagen und Undichtigkeiten führen.

Die DE-OS 39 10 232 beschreibt ein Verfahren zum Verbinden von zwei zylindrischen Teilen, bei welchem zumindest eines der zylindrischen Teile durchmesserreduzierend kaltverformt wird. Es werden somit zwei Rohre unterschiedlichen Durchmessers aufeinander gesteckt, wobei das äußere Rohr kaltverformt wird. Der Grad der mechanischen Festigkeit einer derartigen Verbindung ist ausgesprochen gering, sie ist insbesondere nicht für hydraulische Bremsanlagen von Fahrzeugen zu verwenden.

Der Erfindung liegt die Aufgabe zugrunde, eine Preßverbindung der eingangs genannten Art zu schaffen, welche bei einfachem Aufbau und einfacher, kostengünstiger Herstellbarkeit eine betriebssichere Verbindung zwischen dem Armaturkörper und dem Rohr ermöglicht und ein hohes Maß an mechanischer Festigkeit und Betriebssicherheit aufweist.

Erfindungsgemäß wird die Aufgabe dadurch gelöst, daß das Rohr mit zwei voneinander beabstandeten Rohrbördeln versehen ist, und daß in dem Hülsenbereich zum Einbringen der Rohrbördel bei der Durchmesserreduzierung zwei Ringnuten ausgebildet sind.

Die erfindungsgemäße Preßverbindung zeichnet sich durch eine Reihe erheblicher Vorteile aus. Erfindungsgemäß erfolgt eine Verbindung zwischen dem Rohr und dem Hülsenbereich in bekannter Weise durch eine Durchmesserreduzierung des Hülsenbereiches, d.h. durch eine Kaltverformung. Hierdurch wird die Preßverbindung einfach und mit bekannten Werkzeugen montierbar. Zusätzliche Montagemaßnahmen können vollständig entfallen. Zusätzlich zu dieser mechanischen Verankerung durch die Durchmesserreduzierung des Hülsenbereiches erfolgt jedoch erfindungsgemäß eine dichtende Verbindung durch das Einbringen der beiden Rohrbördel in die beiden Ringnuten. Da die Rohrbördel und die Ringnuten in axialer Richtung einen Abstand oder Versatz zueinander aufweisen, ist die Biegefestigkeit der Preßverbindung ganz erheblich gesteigert, da eine Abstützung des Rohres an der Hülse in den beiden Ringnuten-Rohrbördelbereichen erfolgt. Da erfindungsgemäß weiterhin der gesamte Hülsenbereich in seinem Durchmesser reduziert wird, kann eine ausreichend große Vorspannkraft auf das Rohr aufgebracht werden, welche ein unbeabsichtigtes Lösen bei Vibrationen oder mechanischen Beanspruchungen vermeidet.

Im Gegensatz zu dem nächstkommenden Stand der Technik vereinfacht sich erfindungsgemäß auch die Herstellung der fertigen Preßverbindung, da der gesamte Hülsenbereich gleichmäßig verformt wird, so daß die Beschädigung des Rohres durch Einziehen oder Umbördeln des äußeren Randbereiches des Hülsenbereiches, wie bei der DE-PS 34 16 702 vorgeschlagen, ausgeschlossen ist.

Erfindungsgemäß ist es besonders günstig, wenn die Ringnuten einen geringfügig kleineren Querschnitt aufweisen, als die Rohrbördel. Da üblicherweise Rohrbördel mit einem abgerundeten Querschnitt hergestellt werden, welcher sich aus dem Stauchvorgang des Rohres ergibt, erfolgt somit erfindungsgemäß bei einer Reduzierung des Durchmessers des Hülsenbereiches und bei einem dabei erfolgenden Einpressen der Rohrbördel in die Ringnuten eine nochmalige geringfügige Verformung der Rohrbördel, welche eine paßgenaue Anlage an die Ringnuten zur Folge hat. Die Dichtigkeit der Verbindung wird hierdurch erheblich gesteigert, wobei gleichzeitig die mechanische Festigkeit beträchtlich erhöht wird.

Weiterhin ist es erfindungsgemäß besonders günstig, wenn zur axialen Verspannung des Rohres der axiale Abstand der Rohrbördel von dem axialen Abstand der Ringnuten verschieden ist. Ein geringfügiger Unterschied reicht bereits aus, um eine derartige axiale Verspannung zu bewirken, welche sowohl die Dichtigkeit als auch die Festigkeit der Verbindung erheblich steigert. Die Verankerung des Rohres an dem Armaturkörper erfolgt hierdurch nicht nur durch die radiale Einspannung durch den Hülsenbereich, sondern auch durch die radiale Verspannung beim Einbringen der Ringbördel in die Ringnuten.

Die Ringnuten weisen bevorzugterweise jeweils einen im wesentlichen trapezförmigen Querschnitt auf, während die Rohrbördel jeweils mit einem im wesentlichen halbkreisförmigen Querschnitt versehen sind. Durch diese Kombination wird sichergestellt, daß beim Einbringen der Rohrbördel in die Ringnuten eine weitere Kaltverformung der Rohrbördel erfolgt, welche ebenfalls zur Steigerung der Dichtigkeit und Festigkeit der Verbindung beiträgt.

Im folgenden wird die Erfindung anhand eines Ausführungsbeispiels in Verbindung mit der Zeichnung beschrieben. Dabei zeigt:

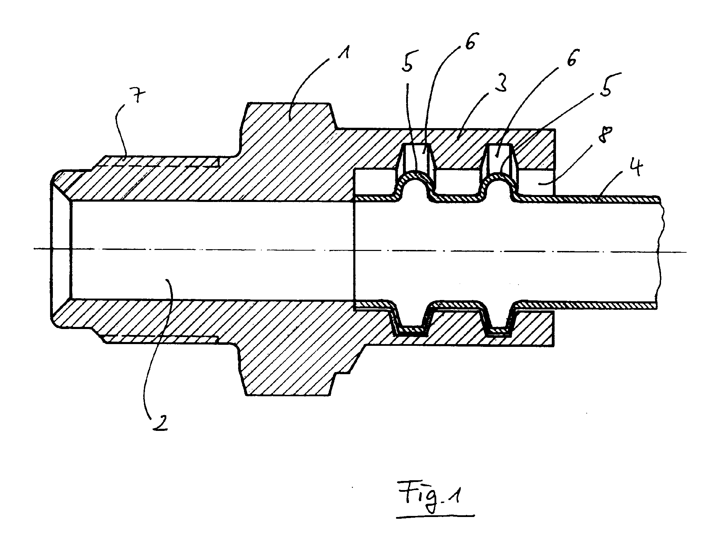

Fig. 1 eine Schnittansicht eines Ausführungsbeispiels, wobei der obere Teil der Fig. 1 einen vormontierten Zustand zeigt, während der untere Bereich von Fig. 1 einen fertiggestellten Zustand der Preßverbindung zeigt.

Die Preßverbindung umfaßt einen Armaturkörper 1, welcher mit einer Durchgangsausnehmung 2 versehen ist. Der Armaturkörper kann an seinem einen Endbereich mit einem Gewinde versehen sein, auf welches eine Mutter oder ein weiteres Bauteil aufschraubbar ist, so daß die Preßverbindung mit allen gängigen Anschlußarmaturen verbindbar ist. Der mittlere Bereich des Armaturkörpers ist bevorzugterweise so ausgebildet, daß er mit einem Werkzeug, beispielsweise einem Schraubenschlüssel in Eingriff bringbar ist.

Wie aus Fig. 1 ersichtlich, weist der Armaturkörper an seinem rechten Endbereich einen Hülsenbereich 3 auf, welcher fluchtend zu der Mittelachse des Armaturkörpers 1 angeordnet ist. Der Hülsenbereich 3 ist mit einer Ausnehmung 8 ausgebildet, welche einen größeren Innendurchmesser aufweist, als die Durchgangsausnehmung 2.

Erfindungsgemäß ist weiterhin ein Rohr 4 vorgesehen, welches an seinem freien Endbereich zwei zueinander beabstandete Rohrbördel 5 aufweist. Die Rohrbördel 5 sind in üblicher Weise hergestellt, beispielsweise durch Stauchen des Rohres.

Der Außendurchmesser der Rohrbördel 5 ist so gewählt, daß er gleich oder kleiner ist, als der Innendurchmesser der Ausnehmung 8.

Der Hülsenbereich 3 ist weiterhin mit zwei zueinander beabstandeten Ringnuten 6 versehen, welche einen im wesentlichen trapezförmigen Querschnitt aufweisen. Der Abstand und die Größe der Ringnuten 6 sind an den Abstand und die Dimensionierung der Rohrbördel 5 angepaßt.

Wie aus der oberen Bildhälfte von Fig. 1 zu ersehen ist, erlaubt der Innendurchmesser der Ausnehmung 8 ein Einschieben des Rohres 4 in den nicht verformten Hülsenbereich 3. Mittels eines geeigneten, üblichen Werkzeuges kann der Hülsenbereich 3 nach Einschieben des Rohres 4 in seinem Durchmesser verringert werden, so daß, wie in der unteren Bildhälfte von Fig. 1 dargestellt, die Rohrbördel 5 in die Ringnuten 6 eingepreßt werden. Die Durchmesserverringerung des Hülsenbereiches 3 erfolgt so, daß der Hülsenbereich 3 auf dem Außendurchmesser des Rohres 4 aufliegt.

## Patentansprüche

1. Preßverbindung zum Leiten einer unter Druck stehenden Flüssigkeit, mit einem Rohr (4) und mit einem mit einer Durchgangsausnehmung (2) versehenen Armaturkörper (1), welcher einen fluchtend zu der Durchgangsausnehmung (2) angeordneten Hülsenbereich (3) umfaßt, welcher in radialer Richtung durchmesserreduzierbar ist und zur Einführung des mit zumindest einem Rohrbördel (5) versehenen Rohres (4) mit einem Innendurchmesser versehen ist, welcher gleich oder größer ist, als der Außendurchmesser des Rohrbördels (5), dadurch gekennzeichnet, daß das Rohr (4) mit zwei voneinander beabstandeten Rohrbördeln (5) versehen ist und daß in dem Hülsenbereich (3) zum Einbringen der Rohrbördel (5) bei der Durchmesserreduzierung zwei Ringnuten (6) ausgebildet sind.

2. Preßverbindung nach Anspruch 1, dadurch gekennzeichnet, daß die Ringnuten (6) einen geringfügig kleineren Querschnitt aufweisen, als die Rohrbördel (5).

3. Preßverbindung nach Anspruch 1 oder 2, dadurch gekennzeichnet, daß zur axialen Verspannung des Rohres (4) der axiale Abstand der Rohrbördel (5) von dem axialen Abstand der Ringnuten (6) verschieden ist.

4. Preßverbindung nach einem der Ansprüche 1 bis 3, dadurch gekennzeichnet, daß die Ringnuten (6) jeweils einen im wesentlichen trapezförmigen Querschnitt aufweisen.

5. Preßverbindung nach einem der Ansprüche 1 bis 4, dadurch gekennzeichnet, daß die Rohrbördel (5) jeweils einen im wesentlichen halbkreisförmigen Querschnitt aufweisen.

## Claims

1. A pressure connection for conveying a fluid which is under pressure, having a pipe (4) and having a fixture body (1) which has a through recess (2) and which comprises a sleeve region (3) arranged in alignment with the through recess (2), which sleeve region (3) can be reduced in diameter in the radial direction and is - for the introduction of the pipe (4) provided with at least one pipe flange (5) - provided with an inside diameter which is equal to or greater than the outside diameter of the pipe flange (5), characterised in that the pipe (4) is provided with two pipe flanges (5) arranged at a distance from one another, and in that in the sleeve region (3) there are formed two annular grooves (6) for the introduction of the pipe flanges (5) during diameter reduction.

2. A pressure connection in accordance with Claim 1, characterised in that the annular grooves (6) have a slightly smaller cross-section than the pipe flanges (5).

3. A pressure connection in accordance with Claim 1 or 2, characterised in that for axial distortion of the pipe (4), the axial distance between the pipe flanges (5) differs from the axial distance between the annular grooves (6).

4. A pressure connection in accordance with any one of Claims 1 to 3, characterised in that the annular grooves (6) have in each case a substantially trapezoidal cross-section.

5. A pressure connection in accordance with any one of Claims 1 to 4, characterised in that the pipe flanges (5) have in each case a substantially semicircular cross-section.

## Revendications

1. Connexion à serrage pour le passage d'un liquide sous pression, comprenant un tuyau (4) et un corps de connecteur (1) présentant une ouverture de passage (2) et une partie formant douille (3), qui est disposée en alignement avec cette ouverture de passage (2), dont le diamètre peut être réduit en direction radiale et qui, pour permettre d'introduire le tuyau (4), lequel présente au moins un épanouissement (5), est dotée d'un diamètre intérieur qui est égal ou supérieur au diamètre extérieur de l'épanouissement de tuyau (5), **caractérisée** en ce que le tuyau (4) présente deux épanouissements (5) écartés l'un de l'autre, et en ce que deux gorges annulaires (6) sont formées dans la partie formant douille (3) afin que les épanouissements de tuyau (5) y rentrent lors de la réduction du diamètre.

2. Connexion à serrage selon la revendication 1, **caractérisée** en ce que les gorges annulaires (6) présentent une section légèrement inférieure à celle des épanouissements (5) du tuyau.

3. Connexion à serrage selon la revendication 1 ou 2, **caractérisée** en ce qu'afin d'assurer une contrainte axial du tuyau (4), la distance axiale entre les épanouissements (5) du tuyau est différente de la distance axiale entre les gorges annulaires (6).

4. Connexion à serrage selon l'une quelconque des revendications 1 à 3, **caractérisée** en ce que les gorges annulaires (6) présentent chacune une section sensiblement trapézoïdale.

5. Connexion à serrage selon l'une quelconque des revendications 1 à 4, **caractérisée** en ce que les épanouissements (5) du tuyau présentent chacun une section sensiblement semi-circulaire.
